# EUROPÄISCHE PATENTSCHRIFT

(11) **EP 0 887 232 B1**
(45) Veröffentlichungstag und Bekanntmachung des Hinweises auf die Patenterteilung: **18.09.2002**
(21) Anmeldenummer: 98110378.1
(22) Anmeldetag: 06.06.1998
(51) Int. Cl.: B60R 5/00

(54) **Transportbehälter-Einrichtung für den Einbau in Kraftfahrzeuge, insbesondere für den sitzlehnenseitigen Einbau in Personenkraftwagen**
Storage container device for vehicle mounting, in particular in passenger car seatback
Dispositif conteneur à encastrer dans un véhicule, en particulier dans le dossier de siège d'un véhicule de passagers

(30) Priorität: 27.06.1997 DE 19727500
(43) Veröffentlichungstag der Anmeldung: 30.12.1998
(73) Patentinhaber: PETER BUTZ GmbH & Co Verwaltungs-KG, 40764 Langenfeld (DE)
(72) Erfinder: Sitzler, Wolfgang, 42111 Wuppertal (DE); Ledüc, Peter, 40468 Düsseldorf (DE)
(74) Vertreter: Patentanwälte Ostriga & Sonnet

(56) Entgegenhaltungen:
- EP-A- 0 154 927
- CH-A- 438 052
- DE-A- 3 447 323
- DE-A- 3 625 666
- DE-A- 3 738 931
- DE-A- 4 106 973
- DE-U- 9 010 405
- DE-U- 29 709 976
- US-A- 5 628 543

## Beschreibung

Die Erfindung betrifft eine Transportbehälter-Einrichtung entsprechend dem Oberbegriff des Anspruchs 1. Eine solche Transportbehälter-Einrichtung, und zwar eine Skisack-Einrichtung, ist durch die DE 34 47 323 C2 bekanntgeworden.

Gemäß der DE 34 47 323 C2 ist eine Befestigungsanordnung in Form eines Befestigungsrahmens vorgesehen, welcher materialmäßig einstückig angeschlossene Verriegelungszungen sowie Rastwiderlager aufweist. Mit diesen Rastwiderlagern wird der Befestigungsrahmen in eine Aussparung der Fondwand eingesetzt und sodann bis zum Einschnappen der Verriegelungszungen in eine Fondwand- bzw. Kofferraumwand-Aussparung hineingedrückt. Auf diese Weise ist eine schnelle und werkzeuglos vorzunehmende Anbringung des Befestigungsrahmens möglich. Auch die Demontage kann werkzeuglos durch unmittelbare Betätigung der Verriegelungszungen geschehen, welche indessen keine gesonderten Betätigungshandhaben aufweisen (vgl. DE 34 47 323 C2 Fig. 1).

Zur Befestigung des Mündungsbereichs eines Skisacks weist der Befestigungsrahmen der bekannten Transportbehälter-Einrichtung gemäß der DE 34 47 323 C2 eine Anlage-Haltefläche in einer Nut auf, in welche ein Halterahmen, und zwar ein Steckrahmen, zur Halterung des Skisack-Mündungsbereichs eingesetzt werden kann. Skisack-Mündungsbereich und Halterahmen bilden somit eine an der Anlage-Haltefläche der Befestigungsanordnung (Befestigungsrahmen) anliegende Gegenanlage-Haltefläche.

Entsprechend der Erfindung wird diese Aufgabe dadurch gelöst, daß der an die mindestens eine Anlage-Haltefläche der Befestigungsanordnung mindestens einer Gegenanlage-Haltefläche anlegbare Halterahmen von einer Adapterplatte gebildet ist, daß die Adapterplatte innerhalb ihres von dem Halterahmen begrenzten Bereichs mindestens eine Befestigungsstelle zur Anbringung des Transportbehälters bildet und daß zur lösbaren Festlegung der Adapterplatte an der jeweiligen Anlage-Haltefläche letzterer mindestens ein Riegel zugeordnet ist.

Mit der Erfindung ist die vorteilhafte Möglichkeit eröffnet worden, beispielsweise bei einer Skisack-Einrichtung anstelle des für einen Skisack vorzusehenden Halterahmens eine Adapterplatte einzusetzen oder die Adapterplatte selbst so auszubilden, daß die als Anbringungsfläche für den Halterahmen einer Skisack-Einrichtung dienen kann. Im letzteren Falle wäre die Adapterplatte mit einer Durchgriffsöffnung versehen.

Ansonsten gestattet die erfindungsgemäße Adapterplatte innerhalb des von ihrem äußeren Rand, dem Halterahmen-Bereich, umgrenzten Flächebereichs die Anbringung beliebiger Transportbehälter. So läßt sich beispielsweise an einer solchen Adapterplatte kofferraumseitig oder in der Fahrgastzelle selbst eine Kühlbox oder ein anderer beliebiger Tranportbehälter anbringen.

Zweckmäßig ist die Adapterplatte so beschaffen, daß ein und dieselbe Adapterplatte wahlweise und austauschbar eine Vielzahl unterschiedlicher Transportbehälter aufnehmen kann. In einem solchen Falle sind die Befestigungsstellen durch voneinander lösbare Befestigungselemente, insbesondere durch Schraubbefestigungselemente oder durch bajonettähnliche Befestigungselemente gebildet.

Daneben umfaßt die Erfindung auch eine Ausführungsform, bei welcher der ohnehin vorhandene (insbesondere kofferraumseitige) Deckel einer Skisack-Einrichtung als Adapterplatte ausgebildet ist. Die letztgenannte Ausführungsform hat den Vorteil, daß es keines besonderen Riegels bedarf, weil ein derartiger Deckel ohnehin mit einem Verschluß versehen ist, beispielsweise mit einem Basküleverschluß.

In den Zeichnungen sind bevorzugte Ausführungsbeispiele der Erfindung dargestellt, es zeigt
Fig. 1 eine vertikale Schnittansicht durch einen oberen Fondsitzlehnen-Bereich mit einer teilweise dargestellten Transportbehälter-Einrichtung und
Fig. 2 eine Fig. 1 entsprechende Darstellung einer abgewandelten Ausführungsform.

In den Zeichnungen ist eine Transportbehälter-Einrichtung, von welcher nur der obere Teil dargestellt ist, mit 10 bezeichnet.

Die Transportbehälter-Einrichtung 10 ist beim gezeigten Ausführungsbeispiel in dem zugleich eine Kofferraumtrennwand 12 bildenden Sitzlehnengestell 11 einer Fondsitzlehne 13 eingebaut.

In Höhe einer klappbaren Mittelarmlehne 14, deren Ruheposition gestrichtelt eingetragen ist, bildet die mit einer Verkleidung 15 versehene Kofferraumtrennwand 12 eine auch als Durchladeöffnung zu bezeichnende Aussparung 16, an deren Rand 17 eine Befestigungsanordnung in Form eines umlaufenden Befestigungsrahmens 18 in nicht näher dargestellter Weise befestigt, insbesondere schraubbefestigt od. dgl., ist.

Der Befestigungsrahmen 18 bildet eine umlaufende rückwärtige Anlage-Haltefläche 19 und außerdem, ein wenig zum Kofferraum 20 hin stufenweise zurückgesetzt, eine zusätzliche umlaufende Anlage-Haltefläche 21.

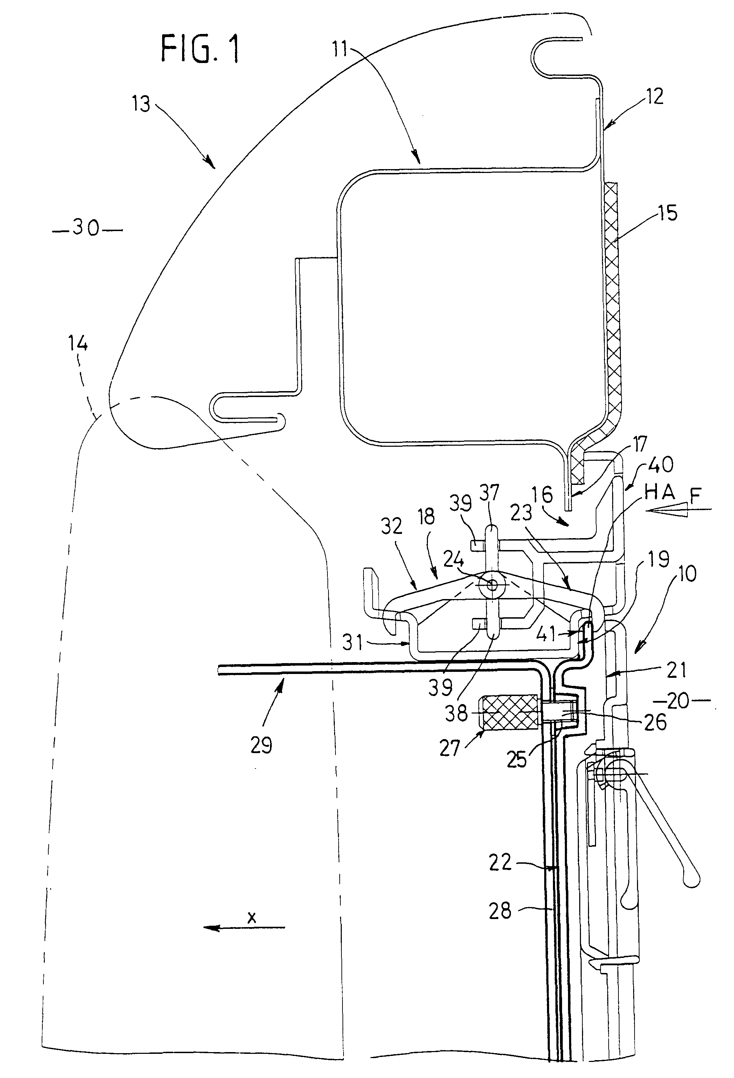

Aus Fig. 1 ist zu ersehen, daß eine Adapterplatte 22 einen umlaufenden Halterand HA bildet, welcher mittels eines Schwenkriegels 23, der um eine Achse 24 schwenkbar ist, lösbar festgelegt ist. Die Adapterplatte 22 liegt mit einer Gegenanlage-Haltefläche 41 an der Anlage-Haltefläche 19 an.

Innerhalb des vom Halterand HA umgebenden Bereichs besitzt die Adapterplatte 22 mehrere Muttergewindeaufnahmen 25, in welche jeweils ein Außengewinde 26 einer Rändelschraube 27 eingreift, die zugleich eine Wand 28 eines starren Transportbehälters 29 durchgreift, derart, daß der Transportbehälter 29 an der Adapterplatte 22 lösbar befestigt ist. Bei dem Transportbehälter 29 kann es sich z.B. um eine Kühlbox oder um anderes beliebiges Behältnis handeln.

Die in Fig. 1 dargestellte Ausführungsform läßt es auch zu, die Adapterplatte 22 in dem dem Fahrgastraum 30 zugewandten Bereich des Befestigungsrahmens 18 lösbar zu haltern. Dort weist nämlich der Befestigungsrahmen 18 ebenfalls eine der Anlage-Haltefläche 19 vergleichbare Anlage-Haltefläche 31 auf, welche eine Anbringung der Adapterplatte 22 vom Fahrgastraum 30 her gestattet. Als Pendant zum Schwenkriegel 23 weist der in Fahrtrichtung x vordere Bereich des Befestigungsrahmens 18 einen Schwenkriegel 32 auf, welcher in der Lage ist, den Halterand HA der Adapterplatte 22 zu hintergreifen.

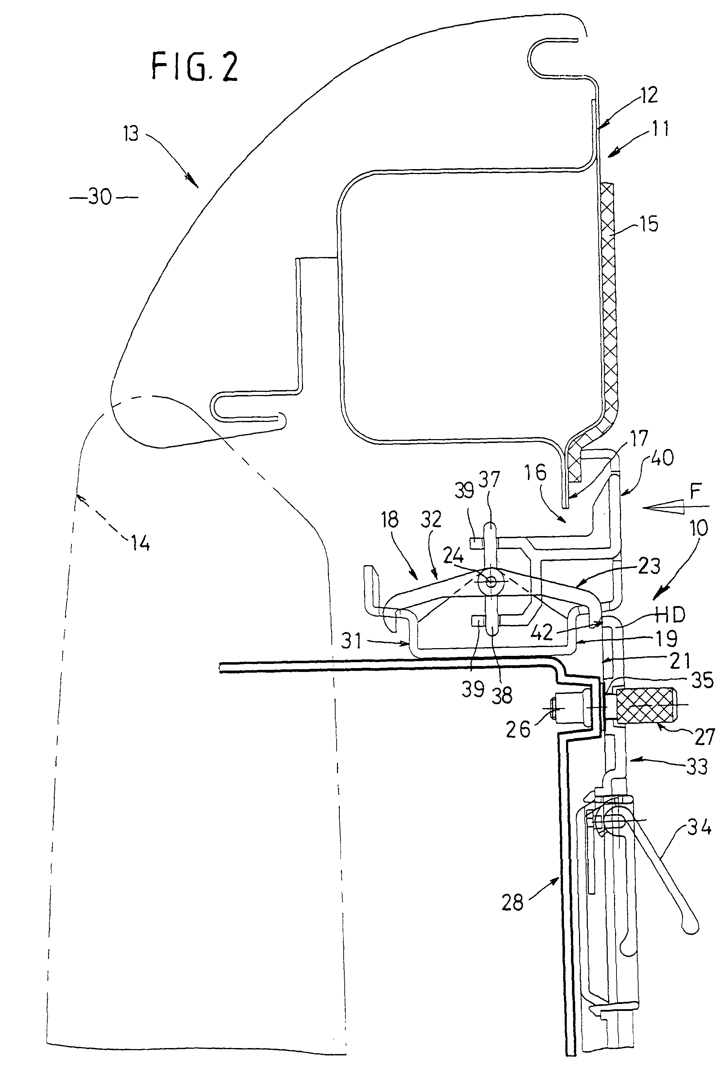

Die Ausführungsform gemäß Fig. 2 unterscheidet sich von der gemäß Fig. 1 dadurch, daß eine Adapterplatte 33 in Form eines ohnehin vorhandenen Deckels einer Skisack-Einrichtung vorhanden ist. Die Adapterplatte 33 lehnt sich mit der Gegenanlage-Haltefläche 42 ihres Halterandes HD an der stufenweise zurückgesetzten Anlage-Haltefläche 21 des Befestigungsrahmens 18 an.

Zur Verriegelung der deckelartigen Adapterplatte 33 in der gemäß in Fig. 1 dargestellten Lage kann beispielsweise ein Basküleverschluß dienen, welcher mittels eines Betätigungshebels 34 bedienbar ist.

Als Befestigungsstelle ist die Adapterplatte 33 mit Durchstecköffnungen 35 für das jeweilige Außengewinde 26 der Rändelschraube 27 versehen. Das Außengewinde 26 kooperiert mit einem innenseitig in der Wand 28 des starren Behälters 29 befestigten Muttergewindeteil 36. Die auch aus Fig. 2 ersichtlichen Schwenkriegel 23, 32 sind beim Ausführungsbeispiel gemäß Fig. 2 funktionslos.

Die Schwenkriegel 23, 32 sind durch Druckbetätigung in Pfeilrichtung F entgegen Rückstellkraft nicht dargestellter Federn, z.B. von Schenkelfedern, aus ihrer dargestellten Verriegelungsstellung in ihre Lösestellung hinein versetzbar. Dazu weist der Schwenkriegel 23 einen einstückig angeformten Hebelfortsatz 37 auf, während der Schwenkriegel 32 einen einstückig angeformten, nach unten weisenden Hebelfortsatz 38 besitzt. Beide Hebelfortsätze 37, 38 sind mit den Gabelschenkeln 39 einer Drucktaste 40 bewegungseinheitlich.

## Patentansprüche

1. Transportbehälter-Einrichtung (10) für den Einbau in Kraftfahrzeuge, wie z.B. Durchlade-Einrichtung, insbesondere für den sitzlehnen- oder kofferraumwandseitigen Einbau in Personenkraftwagen, mit einer am Rand (17) einer fahrzeugseitigen Durchladeöffnung (16) anzubringenden Befestigungsanordnung (18), welche mindestens eine sich in einer Ebene erstreckende Anlage-Haltefläche (19, 21) für eine Gegenanlage-Haltefläche (41, 42) eines Halterahmens (HA, HD) eines Transportbehälters (29), wie eines Skisacks od. dgl., bildet, **dadurch gekennzeichnet, daß** der an die mindestens eine Anlage-Haltefläche (19, 21) der Befestigungsanordnung (18) mit mindestens einer Gegenanlage-Haltefläche (41, 42) anlegbare Halterahmen (HA, HD) von einer Adapterplatte (22, 33) gebildet ist, daß die Adapterplatte (22, 33) innerhalb ihres von dem Halterahmen (HA, HD)begrenzten Bereichs mindestens eine Befestigungsstelle (25, 35) zur Anbringung des Transportbehälters (29) bildet, und daß zur lösbaren Festlegung der Adapterplatte (22, 33) an der jeweiligen Anlage-Haltefläche (41, 42) letzterer mindestens ein Riegel (23, 32; bei 34) zugeordnet ist.

2. Transportbehälter-Einrichtung nach Anspruch 1, **dadurch gekennzeichnet, daß** die Adapterplatte (33) vom hinteren, z.B. kofferraumseitigen, Deckel einer Skisack-Einrichtung gebildet ist.

3. Transportbehälter-Einrichtung nach Anspruch 1 oder nach Anspruch 2, **dadurch gekennzeichnet, daß** die jeweilige Befestigungsstelle durch voneinander lösbare Befestigungselemente (25, 27; 27, 35, 36) gebildet ist.

4. Transportbehälter-Einrichtung nach einem der Ansprüche 1 bis 3, **dadurch gekennzeichnet, daß** die Adapterplatte (22, 33) eine Durchgriffsöffnung aufweist.

## Claims

1. Carrying container-device (10) for mounting in motor vehicles, such as a stowage-device, which can be mounted in passenger vehicles from the seat-back end or boot compartment wall-end in particular, having a mounting assembly (18) to be mounted on the edge (17) of a vehicle-side stowage opening (16), forming at least one contact-retaining surface (19, 21), extending in a plane, for a counter contact-retaining surface (41, 42) of a retaining frame (HA, HD) of a carrying container (29), such as a ski bag or similar, **characterised in that** the retaining frame (HA, HD), which can be placed on the at least one contact-retaining surface (19, 21) of the mounting assembly (18) by at least one counter contact-retaining surface (41, 42), is provided in the form of an adapter plate (22, 33), which adapter plate (22, 33) forms at least one fixing point (25, 35) for mounting the carrying container (29) inside its region bounded by the retaining frame (HA, HD), and the adapter plate (22, 33) is provided with at least one lock (23, 32; with 34) so that it can be detachably secured on the respective contact-retaining surface (41, 42).

2. Carrying container-device as claimed in claim 1, **characterised in that**, from the rear, i.e. the boot compartment end, the adapter plate (33) is the cover of a ski bag-device.

3. Carrying container-device as claimed in claim 1 or claim 2, **characterised in that** the respective fixing point is provided in the form of fixing elements (25, 27; 27, 35, 36) detachable from one another.

4. Carrying container-device as claimed in one of claims 1 to 3, **characterised in that** the adapter plate (22, 33) has a reciprocal opening.

## Revendications

1. Equipement pour récipient de transport (10), à monter dans des véhicules automobiles, tel que par exemple équipement pour chargement avec traversée, en particulier pour le montage côté dossier ou côté paroi de coffre à bagage dans des voitures particulières, avec un dispositif de fixation (18), à monter sur le bord (17) d'une ouverture de chargement (16) avec traversée située côté véhicule, formant au moins une surface de maintien en appui (19, 21) s'étendant dans un plan, pour une surface de contre-maintien en appui (41, 42) d'un cadre de maintien (HA, HD) d'un récipient de transport (29), tel qu'un sac à skis ou analogue, **caractérisé en ce que** le cadre de maintien (HA, HD) pouvant être appliqué sur la au moins une face de maintien en appui (19, 21) du dispositif de fixation (18), à l'aide d'au moins une face de contre-maintien en appui (41, 42), est formé par une plaque adaptatrice (22, 23), **en ce que** la plaque adaptatrice (22, 23) forme, à l'intérieur de sa zone délimitée par le cadre de maintien (HA, HD), au moins un point de fixation (25, 35) pour le montage du récipient de transport (29), et **en ce que**, pour fixer de façon désolidarisable la plaque adaptatrice (22, 23) sur la surface de maintien en appui (41, 42) respective, au moins un verrou (23, 32; en 34) est associé à cette dernière.

2. Equipement pour récipient de transport selon la revendication 1, **caractérisé en ce que** la plaque adaptatrice (33) est formée par un couvercle arrière, c'est-à-dire situé côté coffre à bagage, d'un équipement à sac à skis.

3. Equipement pour récipient de transport selon la revendication 1 ou selon la revendication 2, **caractérisé en ce que** le point de fixation respectif est formé par des éléments de fixation (25, 27 ; 27, 35, 36) désolidarisables les uns des autres.

4. Equipement pour récipient de transport selon les revendications 1 à 3, **caractérisé en ce que** la plaque adaptatrice (22, 33) présente une ouverture de saisie par l'intérieur.
